# DEMANDE DE BREVET EUROPEEN

(11) **EP 0 743 731 A1**
(43) Date de publication de la demande: **20.11.1996**
(21) Numéro de dépôt: 96400994.8
(22) Date de dépôt: 09.05.1996
(51) Int. Cl.: H02G 1/08

(54) **Procédé et dispositif pour la mise en place de câbles de télécommunications à l'intérieur d'une conduite contenant déjà un câble existant**

(30) Priorité: 18.05.1995 FR 9505928
(71) Demandeur: FRANCE TELECOM, 75015 Paris (FR)
(72) Inventeur: Fages, Christian, 34970 Maurin-Lattes (FR); Masclaux, Paul, 34970 Lattes (FR)
(74) Mandataire: Armengaud Ainé, Alain

(57) **Abrégé**

Procédé pour la mise en place dans une conduite (1) contenant déjà au moins un câble gainé (2) existant, caractérisé en ce qu'il consiste à insérer progressivement dans cette conduite une structure de protection et de séparation (10), comprenant une première section (11) apte à venir entourer le câble existant au fur et à mesure de l'introduction de cette structure, et une seconde section (14), complémentaire de la première, délimitant dans le volume de la conduite et selon sa longueur, au moins un alvéole (15, 16) à contour fermé sur lui-même pour la mise en place ultérieure d'au moins un câble complémentaire, séparé du câble existant.

L'invention concerne également un dispositif pour la mise en oeuvre de ce procédé.

## Description

La présente invention est relative à un procédé pour la mise en place d'un ou plusieurs câbles de télécommunications, notamment du genre câbles à fibres optiques, à l'intérieur d'une conduite déjà en place, en particulier enterrée en sous-sol ou disposée dans un ouvrage de génie civil souterrain, cette conduite contenant elle-même au moins un câble de transmission qui occupe une partie du volume disponible.

Le procédé selon l'invention vise à pouvoir efficacement et aisément disposer autour du câble déjà logé dans la conduite et s'étendant selon la longueur de celle-ci un tube de protection externe, en même temps qu'une pluralité d'autres tubes parallèles se répartissant dans le volume restant à l'intérieur de cette conduite, ces tubes parallèles étant destinés à recevoir ensuite d'autres câbles indépendants, introduits selon leur direction longitudinale, le câble de transmission d'origine entouré par le tube de protection pouvant être laissé en place ou le cas échéant être ultérieurement retiré, de façon à être à son tour substitué par un autre câble, similaire ou différent.

L'invention concerne également un dispositif pour la mise en oeuvre de ce procédé et en particulier pour disposer le tube de protection sur le câble existant au fur et à mesure de l'engagement dans la conduite des autres tubes parallèles, ceci sans léser la gaine de ce câble et en assurant une répartition appropriée des tubes dans cette conduite pour occuper au mieux le volume libre à l'intérieur de celle-ci.

Dans les réseaux de télécommunications existant à ce jour, notamment en milieu urbain, un investissement considérable a la plupart du temps été déjà réalisé en matière de génie civil, pour enterrer les conduites enfermant les câbles nécessaires à ces réseaux, ces conduites étant généralement constituées par des tubes de protection extérieure en chlorure de polyvinyle (PVC) ou analogue, dans lesquels au moins un câble de transmission, comportant usuellement des conducteurs métalliques gainés et isolés, a été mis en place par toute technique classique appropriée.

Le câble ainsi logé dans une conduite de ce genre comporte notamment une gaine externe, par exemple en polyéthylène à haute densité (PEHD) , entourant un ensemble de fils métalliques en cuivre ou en alliage de ce métal, le diamètre extérieur de la gaine étant très généralement largement inférieur à celui de la conduite de protection dans laquelle il s'étend.

Or, l'accroissement des capacités exigées de ces réseaux, avec les multiples transmissions d'informations nécessaires pour satisfaire à la demande des Consommateurs (téléphone, télévision, câbles pour le transfert d'images, connexions avec des banques de données...) implique de disposer d'un nombre de plus en plus élevé de câbles, à fibres optiques ou autres, pour acheminer les signaux correspondants.

On conçoit dès lors l'intérêt des usagers pour une utilisation optimale des infrastructures déjà en place et notamment l'avantage de pouvoir profiter de l'existence de conduites enterrées et des ouvrages de génie civil disponibles, notamment pour le logement de ces conduites, de manière à permettre l'introduction dans ces dernières, indépendamment du ou des câbles déjà existants, d'autres câbles parallèles mais totalement indépendants, propres à transmettre d'autres informations.

En outre, il s'avère de plus en plus utile de pouvoir procéder au retrait des câbles déjà en place, le cas échéant de conception ancienne, par des câbles neufs, plus efficaces, moins encombrants et ayant surtout des capacités et des performances très sensiblement supérieures.

A défaut, la pose d'un nouveau câble exige la construction d'une tranchée ou d'une structure d'accueil de ce câble, qui risque de grever de manière excessive, sinon totalement prohibitoire, l'économie de l'opération, surtout en milieu urbain où la réalisation d'ouvrages de génie civil souterrains est rendue particulièrement délicate par l'ensemble des installations préexistantes.

On constate enfin que, dans une conduite déjà en place contenant un câble de transmission classique, il est difficile en l'état d'introduire un ou plusieurs câbles complémentaires au voisinage immédiat de celui-ci à l'intérieur de cette conduite, notamment par un processus de poussée ou de tirage sur l'extrémité de ces nouveaux câbles.

En effet, la conduite peut présenter une longueur importante, pouvant atteindre pour chaque tronçon successif entre deux chambres d'accès à ses extrémités, une dimension de l'ordre de 100 m ou plus. Or, sur une telle longueur, la mise en place forcée d'un nouveau câble risque de produire au contact de la gaine extérieure du câble existant un frottement notable qui peut conduire à une difficulté toute particulière pour franchir les coudes de cette dernière et, soit endommager l'un et l'autre de ces câbles, soit bloquer le nouveau câble mis en place qui ne peut alors s'étendre d'une extrémité à l'autre de cette conduite.

La présente invention a donc pour objet un procédé et un dispositif qui permettent de loger dans une conduite existante, contenant au moins un câble gainé déjà en place, une structure particulière, propre d'une part à permettre ultérieurement l'introduction sûre et aisée de câbles complémentaires indépendants à l'intérieur de cette conduite, d'autre part à protéger le câble existant en autorisant si nécessaire un retrait de ce câble hors de la conduite sans être gêné par la présence des câbles nouveaux ainsi logés dans celle-ci.

A cet effet, le procédé considéré, pour la mise en place dans une conduite contenant déjà au moins un câble gainé existant, se caractérise en ce qu'il consiste à insérer progressivement dans cette conduite une structure de protection et de séparation, comprenant une première section apte à venir entourer le câble existant au fur et à mesure de l'introduction de cette structure, et une seconde section, complémentaire de la première, délimitant dans le volume de la conduite et selon sa longueur, au moins un alvéole à contour fermé sur lui-même pour la mise en place ultérieure d'au moins un câble complémentaire, séparé du câble existant.

De préférence, on fait comporter à la première section de la structure une fente longitudinale, dont les deux lèvres sont propres à s'écarter sensiblement l'une de l'autre, au fur et à mesure de la mise en place de la structure dans la conduite pour permettre le passage du câble existant, s'engageant dans la première section au travers de cette fente, avant que ces lèvres ne se rapprochent pour emprisonner ce câble existant dans cette première section.

Avantageusement, on monte sur le câble existant, à son extrémité disposée en aval et à l'extérieur de la conduite, un revêtement de protection, pour faciliter le glissement sur celui-ci des lèvres de la fente de la première section de la structure, au fur et à mesure de l'introduction dans celle-ci du câble existant.

Selon une autre caractéristique, on monte dans l'alvéole à contour fermé sur lui-même un organe de traction ou de poussée de la structure afin d'assurer son insertion dans la conduite, en même temps qu'on réalise l'introduction progressive du câble existant dans la première section. Le dispositif selon l'invention, pour la mise en oeuvre du procédé ci-dessus, se caractérise pour sa part en ce qu'il comporte, pour l'introduction dans la conduite de la structure de protection et de séparation, un organe de traction solidarisé de l'alvéole de la seconde section de cette structure pour exercer un effort d'entraînement sur celle-ci à l'intérieur de la conduite au fur et à mesure de l'engagement du câble existant dans la première section au travers de la fente de celle-ci.

Selon une caractéristique particulière, l'organe de traction comporte un élément expansible, engagé dans l'alvéole par l'extrémité de la structure et apte à être ancré contre la paroi interne de cet alvéole, cet organe comportant une barre de tirage, munie en bout d'un moyen pour la fixation de l'extrémité d'un fil réalisant l'entraînement de la structure dans la conduite, d'une extrémité à l'autre de celle-ci.

Dans un mode de réalisation préféré, l'organe de traction comporte un sabot de guidage, présentant un alésage traversant pour le passage du câble existant, ce sabot comprenant un épaulement de butée pour l'extrémité de la première section de la structure recevant ce câble au travers de sa fente longitudinale au fur et à mesure du déplacement de cet organe dans la conduite, selon la longueur de ce câble.

De préférence également, le sabot de guidage de l'organe de traction présente un logement dans lequel pénètre la seconde section de la structure, l'extrémité de celle-ci venant en appui contre une portée prévue en regard dans ce sabot.

Selon une autre caractéristique du dispositif considéré, l'élément expansible de l'organe de traction, engagé dans l'alvéole de la seconde section comporte un bouchon muni d'une fente latérale propre à lui conférer une relative élasticité et comporte un passage axial dans lequel est monté un embout conique, prolongé par un mandrin fileté à une extrémité, recevant un écrou arrêté par le sabot de guidage, de telle sorte que la rotation de l'écrou provoque le déplacement du mandrin et l'expansion diamétrale du bouchon par l'embout conique, en réalisant le blocage de l'élément expansible contre la surface interne de l'alvéole.

Dans un mode de réalisation préféré de l'invention, la seconde section de la structure de protection du dispositif comporte deux alvéoles d'axes parallèles et deux organes de traction, respectivement montés dans l'un et l'autre de ces deux alvéoles, dont chacun reçoit un élément expansible, le sabot de guidage de ces deux organes de traction présentant une traverse horizontale, formant portée d'appui commune.

Selon encore une autre caractéristique, la barre de tirage est solidarisée de la traverse horizontale, sensiblement au centre de celle-ci, afin de répartir l'effort de traction exercé sur la structure de protection lors de son introduction dans la conduite.

Avantageusement, le sabot de guidage présente à son extrémité qui s'engage dans la conduite, un bec frontal, profilé pour provoquer le soulèvement du câble existant reposant contre le fond de la conduite, au fur et à mesure du déplacement dans celle-ci de la structure de protection. De préférence également, le sabot comporte, dans sa partie antérieure, un ergot d'accrochage sur la première section de la structure de protection.

Enfin et selon diverses formes de réalisation possibles, la structure de support comporte, dans sa seconde section, une pluralité d'alvéoles voisins, à contours généralement circulaires, tous identiques ou présentant des profils différents, ces alvéoles étant aptes à occuper de façon optimale le volume libre de la conduite à l'extérieur de la première section qui reçoit le câble existant, cette première section présentant une paroi circulaire ou délimitée par des surfaces planes délimitant ensemble un secteur angulaire.

De préférence, la première section entoure un seul câble existant ; elle peut toutefois comporter plusieurs câbles déjà en place. Selon le cas également, la fente longitudinale de la première section, permettant l'introduction du câble existant dans celle-ci, est dirigée du côté de cette première section voisin de la seconde, notamment en étant ménagée entre les deux alvéoles distincts de cette dernière. En variante, cette fente peut être prévue du côté opposé de la seconde section.

D'autres caractéristiques du procédé et du dispositif selon l'invention, apparaîtront encore à travers la description qui suit, faite en référence aux dessins annexés, de plusieurs exemples de réalisation, permettant de bien faire comprendre la mise en oeuvre de ce procédé et illustrant diverses variantes de la structure de protection mise en place au moyen du dispositif, lesquelles sont seulement données à titre indicatif et non limitatif. Sur ces dessins :
- Les Figures 1 et 2 sont des vues en coupe longitudinale, schématiques d'une conduite enterrée dans laquelle est déjà en place un câble existant et des moyens qui permettent de réaliser l'introduction dans la conduite d'une structure de protection pour ce câble, conformément à l'invention.
- Les Figures 3, 4 et 5 sont des vues également très schématiques, en perspective et à plus grande échelle, de l'extrémité de la conduite dans laquelle est monté le câble déjà en place, et de la structure de protection considérée.
- Les Figures 6 à 10 explicitent de façon plus détaillée les diverses étapes de mise en oeuvre du procédé de l'invention.
- La Figure 11 est une vue en coupe longitudinale, à échelle notablement plus importante, illustrant le sabot de guidage de la structure de protection, monté en tête de celle-ci, et de l'organe de traction associé à ce sabot.
- La Figure 12 est une vue en coupe transversale de la Figure 11 selon la ligne A-A de cette dernière.
- La Figure 13 est une vue de détail de l'organe de traction et de l'élément expansible monté dans chacun des alvéoles de la seconde section de la structure de protection.
- La Figure 14 est une vue de face d'un des bouchons fendus entrant dans la réalisation de l'élément expansible.
- Les Figures 15 à 22 sont des vues en coupe schématiques, illustrant diverses formes de réalisation possibles pour les deux sections de la structure de protection.

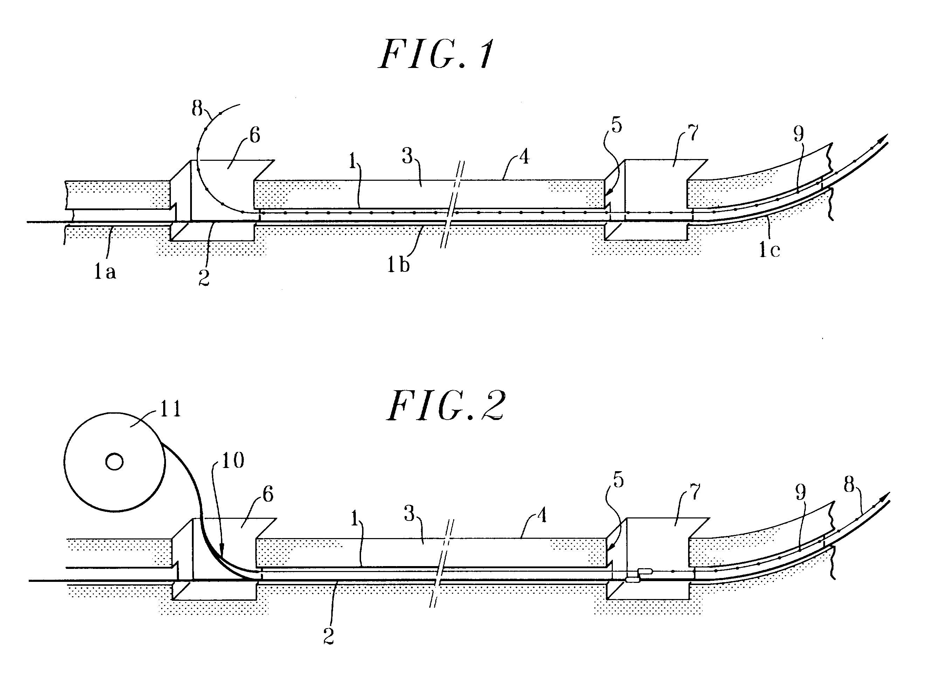

Sur la Figure 1, on a succinctement représenté une conduite 1, à l'intérieur de laquelle est monté un câble de transmission 2, d'un type en lui-même connu et dont le détail de la réalisation n'importe pas directement à l'invention, ce câble pouvant notamment comporter une gaine de protection externe, généralement réalisée en un matériau plastique tel que le PEHD et contenant une pluralité de conducteurs, notamment métalliques, en cuivre ou autre métal ou alliage approprié.

La conduite 1 est enterrée, c'est-à-dire se situe dans la profondeur du sol 3, à un niveau donné sous la surface 4 de celui-ci, en étant de préférence disposée dans un ouvrage de génie civil tel que schématisé sous la référence 5 et dont la forme est également indifférente pour la présente invention, cet ouvrage, notamment réalisé en béton, évitant en particulier l'écrasement de la conduite sous le poids de la partie du sol qui se trouve au-dessus d'elle.

De façon classique, la conduite 1 est constituée de tronçons successifs tels que 1a, 1b, 1c..., disposés dans le prolongement les uns des autres pour assurer la continuité de la conduite, chaque tronçon présentant une longueur donnée, variable d'une réalisation à l'autre mais qui peut en règle générale atteindre ou dépasser 100 m.

Entre les tronçons consécutifs, sont prévues des chambres d'accès à la conduite, telles que 6 et 7 sur les dessins, ces chambres permettant notamment d'introduire dans ces tronçons, outre le câble 2, un fil de traction 8, lequel peut comporter des éléments de guidage 9, fixés à écartements convenables sur la longueur de ce fil et dont le but est de permettre, lorsque le câble est tiré progressivement, le franchissement des coudes ou autres discontinuités pouvant exister selon la longueur de la conduite, d'une extrémité à l'autre de celle-ci.

La réalisation d'un ouvrage de génie civil 5 du genre brièvement mentionné ci-dessus et la mise en place dans celui-ci d'une conduite 1 pour recevoir le câble 2, représentent un investissement considérable, en particulier en milieu urbain, en raison des sujétions qu'impliquent le creusement d'une tranchée, la construction de l'ouvrage lui-même à l'intérieur de celle-ci et la reconstitution du terrain extérieur, aussi bien que la mise en oeuvre des moyens de dépose et de tirage du câble.

On conçoit donc qu'il soit particulièrement opportun de pouvoir utiliser de manière optimale le volume disponible à l'intérieur de chaque conduite 1 ainsi réalisée et montée dans l'ouvrage 5 qui l'entoure.

Or, en pratique, si la conduite 1 est réalisée sous la forme d'une tuyauterie en PVC qui présente une relativement bonne résistance aux frottements et à l'arrachement, le comportement de la gaine du câble 2 se révèle inadapté, en particulier lorsque l'on souhaite introduire, à côté du câble existant, un ou plusieurs autres câbles présentant eux-mêmes des gaines de même type, éventuellement en autres matériaux, qui, lors du tirage de ces câbles par le fil de traction 8, vont frotter directement sur la surface de la gaine du premier câble, en risquant de la détériorer très rapidement, surtout dans les coudes formés selon la longueur de la conduite, voire produire des coincements ou blocages, pouvant rendre l'opération impossible.

L'invention consiste donc à réaliser la mise en place à l'intérieur de la conduite 1 d'une structure de protection, schématiquement désignée sur la Figure 2 sous la référence 10, celle-ci, déroulée en continu à partir d'un touret ou analogue 11 au-dessus du sol 3, au voisinage d'une des chambres d'accès telle la chambre 6 sur la Figure 2, étant aménagée pour venir se disposer progressivement autour du câble existant 2 déjà monté dans la conduite afin de l'isoler mécaniquement, en réalisant simultanément l'introduction, dans le volume restant de cette conduite, à l'extérieur du premier câble, d'alvéoles fermés qui vont constituer des tubes individuels dans lesquels pourront ensuite être disposés d'autres câbles de transmission appropriés, pour lesquels le tirage pourra alors être effectué sans aucun risque à l'égard du câble existant 2.

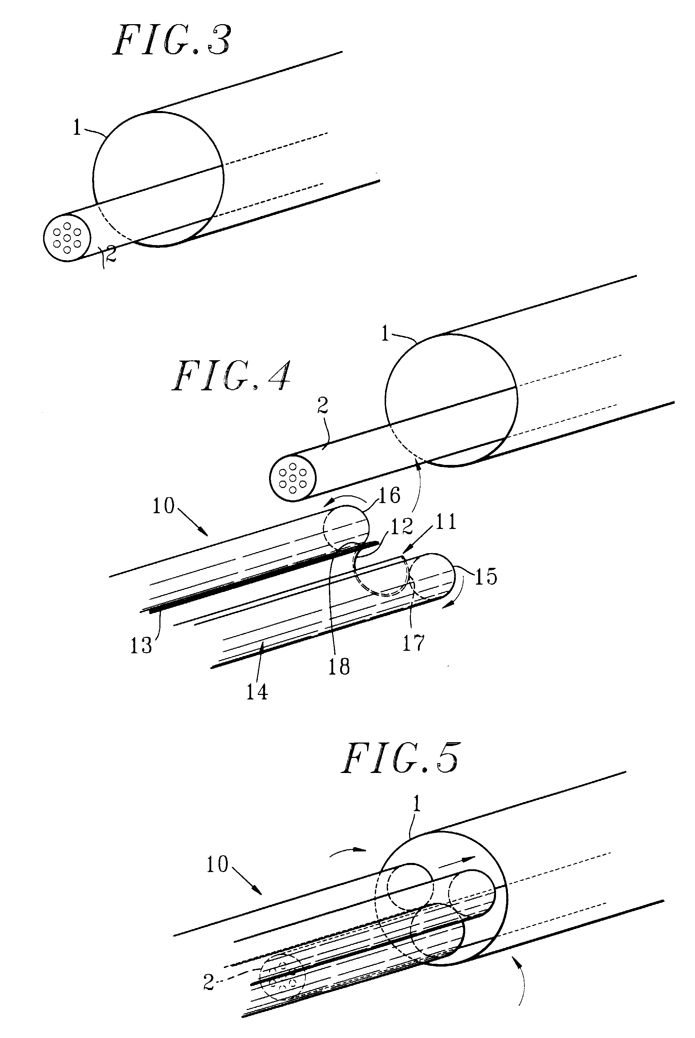

Les Figures 3 à 5 permettent d'illustrer le processus ainsi mis en oeuvre, pour la protection et le tubage du câble existant 2 logé dans la conduite 1 à l'aide de la structure de protection 10, progressivement introduite dans cette conduite selon la longueur de celle-ci et du câble 2 qu'elle contient.

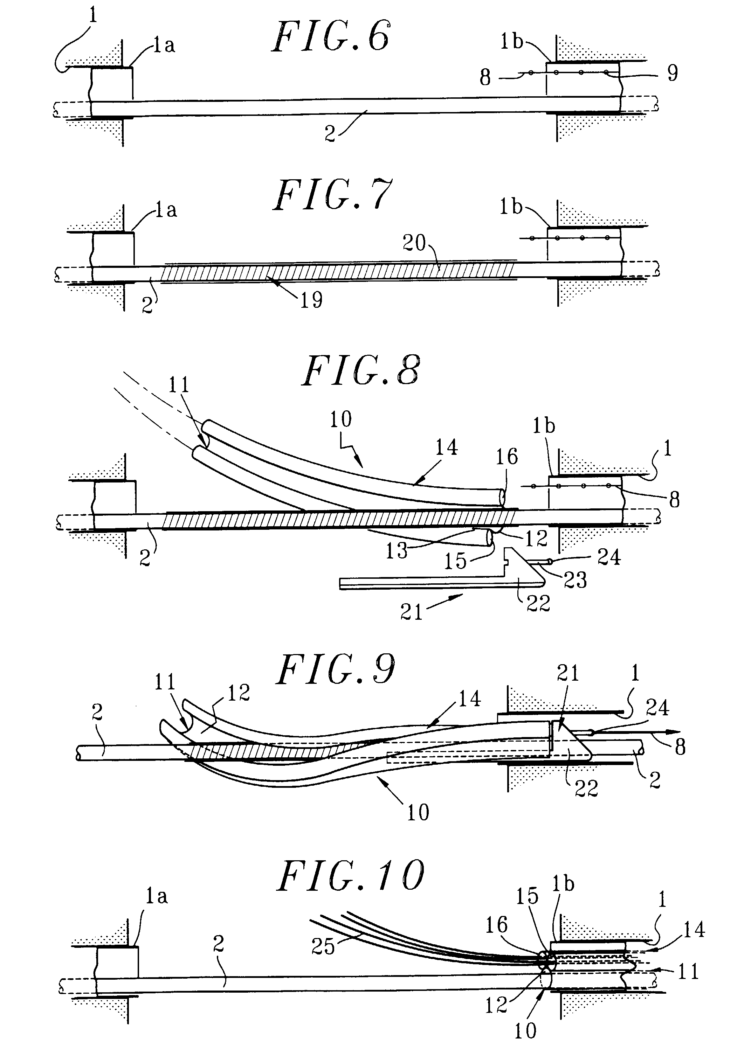

Notamment, sur les Figures 4 et 5, on voit que la structure de protection 10 se compose essentiellement d'une première section 11, délimitant un logement 12 muni d'une fente longitudinale 13 lui permettant de s'ouvrir pour l'engagement du câble 2 dans ce logement avant que la fente ne se referme sur elle-même en emprisonnant ce câble, et d'une seconde section 14 qui, dans l'exemple représenté, est constituée de deux alvéoles fermés, respectivement 15 et 16, à contours sensiblement circulaires comme le logement de la première section elle-même.

De préférence, la structure de protection 10 est réalisée par extrusion ou autre procédé usuel de fabrication d'un élément tubulaire, en un matériau présentant une relative élasticité et surtout une bonne résistance aux frottements, notamment du type polyéthylène à haute densité, analogue à celui qui constitue généralement la conduite 1. En variante, ce matériau peut être de nature différente et en particulier être composite, avec des surfaces intérieure et extérieure distinctes, la couche interne dans la première section étant notamment choisie pour assurer un glissement satisfaisant sur la gaine externe du câble existant 2 lorsque celui-ci est mis en place dans le logement 12.

Dans ce même exemple, le logement 12 de la première section 11 est solidarisé des deux alvéoles fermés 15 et 16 de la seconde section 14 selon des génératrices de contact, respectivement 17 et 18, la souplesse et l'élasticité du matériau de la structure 10 permettant, par un effort approprié, d'écarter suffisamment les lèvres de la fente 13 pour le passage du câble existant 2, avant que cette fente ne se referme en rapprochant les deux alvéoles qui délimitent alors avec la première section un volume dont le contour extérieur est compatible avec l'ouverture de la conduite 1 pour autoriser l'entraînement progressif et continu de la structure 10 dans celle-ci, selon la longueur du câble existant.

Les Figures 6 à 10 schématisent le processus mis en oeuvre selon le procédé de l'invention.

Sur la Figure 6, on retrouve entre les extrémités de deux tronçons successifs 1a et 1b de la conduite 1, au droit de la chambre de liaison 6 par exemple, le câble existant 2 déjà en place dans ces tronçons et qui s'étend dans la conduite sur toute la longueur de celle-ci, sans solution de continuité.

La première étape consiste alors, comme illustré sur la Figure 7, à disposer autour du câble 2, dans la chambre 6 un revêtement de protection 19 de sa gaine externe, lequel peut être simplement constitué par un enroulement d'un feuillard métallique 20. Celui-ci est essentiellement destiné à protéger cette gaine contre le frottement des lèvres de la fente 13 de la première section 11 de la structure de protection 10 lorsque, ces lèvres étant écartées comme représenté sur la Figure 8, se produit vis-à-vis du câble 2 un déplacement relatif de cette structure au fur et à mesure qu'elle pénètre dans la conduite 1 après que la lèvre ait été refermée sur elle-même de la manière déjà exposée en relation avec les Figures 4 et 5.

Sur la Figure 8, apparaissent également les moyens qui permettent de tirer la structure de protection 10 dans la conduite 1 pour réaliser la mise en place de sa première section 11 sur le câble existant 2 et l'introduction simultanée de la seconde section 14 avec ses alvéoles fermés 15 et 16.

A cet effet, la structure de protection 10 est associée à un organe de traction 21, constitué essentiellement d'un sabot de guidage 22 et de moyens d'ancrage, ici non représentés mais qui seront décrits ci-après, pour solidariser l'organe de traction avec les alvéoles 15 et 16. Le sabot 22 comporte en outre, dans sa partie frontale une barre de tirage 23, munie en bout d'un oeillet 24 pour la fixation de l'extrémité du fil de traction 8 qui entraîne ainsi la structure de protection 10 selon la longueur de la conduite, au fur et à mesure de l'engagement du câble 2 dans celle-ci, comme illustré sur la Figure 9.

Enfin, on a montré sur la Figure 10 comment, une fois la structure de protection 10 introduite dans la conduite 1, en entourant le câble existant 2 dans le logement 12 de sa première section 11, les alvéoles fermés 15 et 16 de la seconde section 14 peuvent être ensuite garnis de câbles de transmission 25, éventuellement de nature différente de celle du câble 2, la mise en place de ces nouveaux câbles 25 pouvant être réalisée par tout procédé classique, sans aucun contact avec le câble 2 déjà en place, entièrement protégé dans la première section.

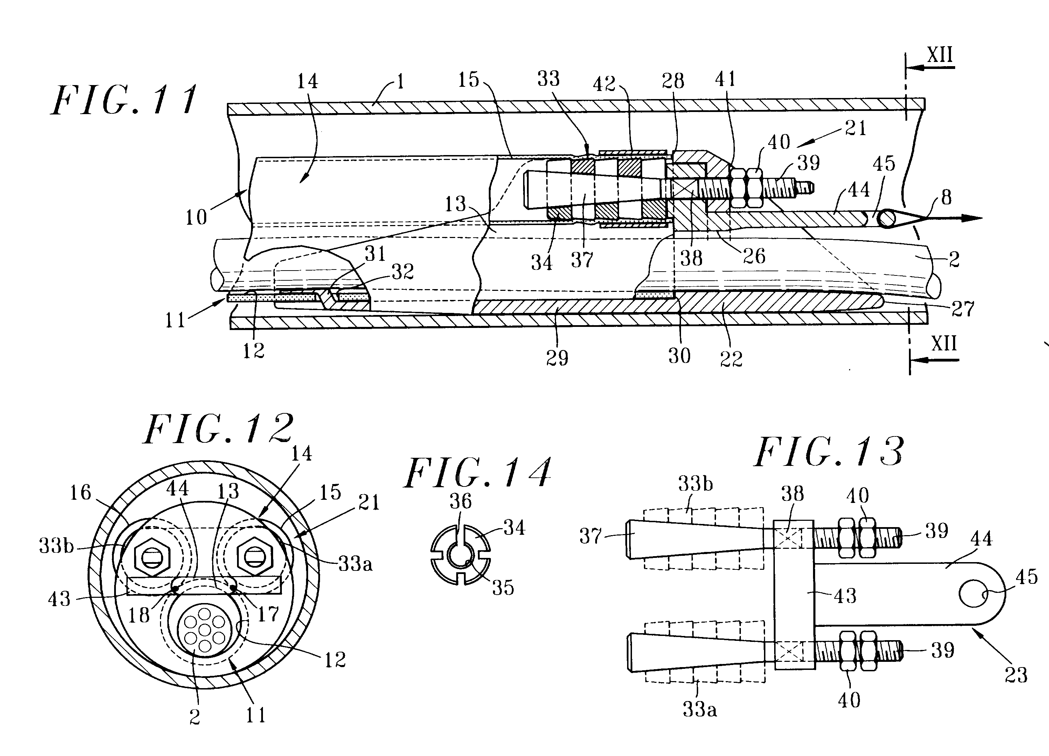

La Figure 11 illustre, à plus grande échelle, l'organe de traction 21 associé à la structure de protection 10 à mettre en place à l'intérieur de la conduite 1 pour isoler le câble existant 2 dans la première section 11 de cette structure et disposer au voisinage de cette dernière les alvéoles fermés de la seconde section 14.

Sur cette Figure, apparaît en particulier le sabot de guidage 22, lequel comporte un alésage traversant 26 pour le passage du câble existant 2, au fur et à mesure du déplacement du sabot dans la conduite 1, entraînant dans son mouvement la structure de protection 10.

Avantageusement, l'alésage 26 comporte à son extrémité frontale une partie d'extrémité 27, profilée en forme de bec arrondi de manière à venir s'engager sous le câble existant 2 déjà en place à l'intérieur de la conduite 1 et qui repose normalement contre le fond de celle-ci, en le soulevant progressivement lors du déplacement du sabot et en réalisant sa mise en place de la façon déjà indiquée dans le logement 12 de la première section 11.

Le sabot 22 présente par ailleurs, dans sa partie antérieure à l'opposé du bec 27, une portée d'appui 28 qui s'étend verticalement lorsque la conduite 1 est horizontale, cette portée délimitant avec la base 29 du sabot un décrochement 30 contre lequel vient s'appliquer l'extrémité de la première section 11 de la structure 19 recevant le câble existant 2. De façon également préférée, la base 29 se termine par un ergot 31 qui s'engage dans un trou 32 prévu dans la paroi du tube constituant la première section 11, afin d'assurer l'accrochage de la structure 10 sur le sabot.

L'organe de traction 21 comporte par ailleurs, au droit de chacun des alvéoles 15 et 16 de la section 14 de la structure 10, des moyens d'ancrage sur cette dernière, ces moyens étant essentiellement constitués par un élément expansible 33 en forme de bouchon, celui-ci étant de préférence constitué par une série de rondelles 34 accolées, chaque rondelle comportant, comme on peut plus particulièrement le voir sur la Figure 14, un passage axial 35 et une fente transversale 36, lui conférant une relative élasticité.

L'élément expansible 33 ainsi formé est associé à un embout 37 de forme conique, engagé dans le passage 35 et prolongé, vers l'avant du sabot 22, par un mandrin 38 dont l'extrémité 39 est filetée de manière à pouvoir coopérer avec au moins un écrou de blocage 40 en appui sur un épaulement de butée 41 ménagé sur le sabot, de telle sorte que la rotation de l'écrou provoque le déplacement de l'embout 37 à l'intérieur du bouchon 33 et l'expansion transversale de celui-ci, en le bloquant étroitement contre la surface interne des alvéoles 15 ou 16 respectivement. Avantageusement, chacun de ces alvéoles peut être muni d'une bague externe 42, maintenant par l'extérieur l'alvéole ainsi parfaitement immobilisée.

Dans l'exemple de réalisation considéré, la seconde section 14 de la structure de protection 10 comporte deux alvéoles voisins 15 et 16 fermés sur eux-mêmes et solidarisés de la paroi du logement 12 de la première section 11 selon des génératrices de contact 17 et 18, de part et d'autre de la fente 13, permettant le passage du câble 2 de la façon déjà exposée. Dans ce même exemple, l'organe de traction 21 comporte deux bouchons expansibles, respectivement désignés sous les références 33a et 33b sur les Figures 12 et 13, chacun d'eux étant prévu pour s'engager dans un des alvéoles 15 ou 16 en réalisant leur ancrage sur l'extrémité de ceux-ci, préalablement appliquée contre la portée 28 du sabot 22.

Dans ce mode de réalisation, les embouts 37 coopérant avec les bouchons expansibles 33, sont réunis dans le sabot 22 par une traverse horizontale commune 43, maintenant constant leur écartement et par suite celui des alvéoles 15 et 16, en répartissant sur ceux-ci l'effort de traction exercé par le fil de tirage 8. De préférence, la traverse 43 comporte une barre centrale 44 terminée par un oeillet 45 pour l'amarrage de l'extrémité du fil qui tire ainsi sur le sabot de guidage, solidarisé de la structure de protection 10, tant par l'ergot 31 vis-à-vis de la première section 11 que par les bouchons expansibles 33 au droit des alvéoles de la seconde section 14.

Les Figures 15 à 22 illustrent schématiquement diverses variantes de réalisation, dans lesquelles le profil et la composition des deux sections de la structure de support 10 sont différentes de l'une à l'autre, mais sans introduire de modifications substantielles dans les caractéristiques du dispositif et du procédé de mise en oeuvre de l'invention.

Sur la Figure 15, on retrouve ainsi les deux sections 11 et 14 avec le logement 12 de la première recevant le câble existant 2 et les deux alvéoles fermés à profil circulaire de la seconde. Dans ce cas toutefois, la fente 13 par laquelle le câble 2 est mis en place dans le logement 12, est prévue à l'opposé de la seconde section 14, la première section 11 étant solidarisée de l'alvéole 15 le long d'une génératrice 46, mais indépendante du second alvéole 16, lequel est à son tour réuni au premier selon une génératrice parallèle 47.

Sur la Figure 16, les alvéoles 15 et 16 sont solidaires de parois planes, respectivement 48, 49 et 50, qui réalisent le centrage de la structure de protection 10 dans la conduite 1 au fur et à mesure de sa mise en place, la première section 11 de cette structure étant délimitée par les parois 49 et 50 formant entre elles un angle donné dans lequel s'inscrit le câble existant 2.

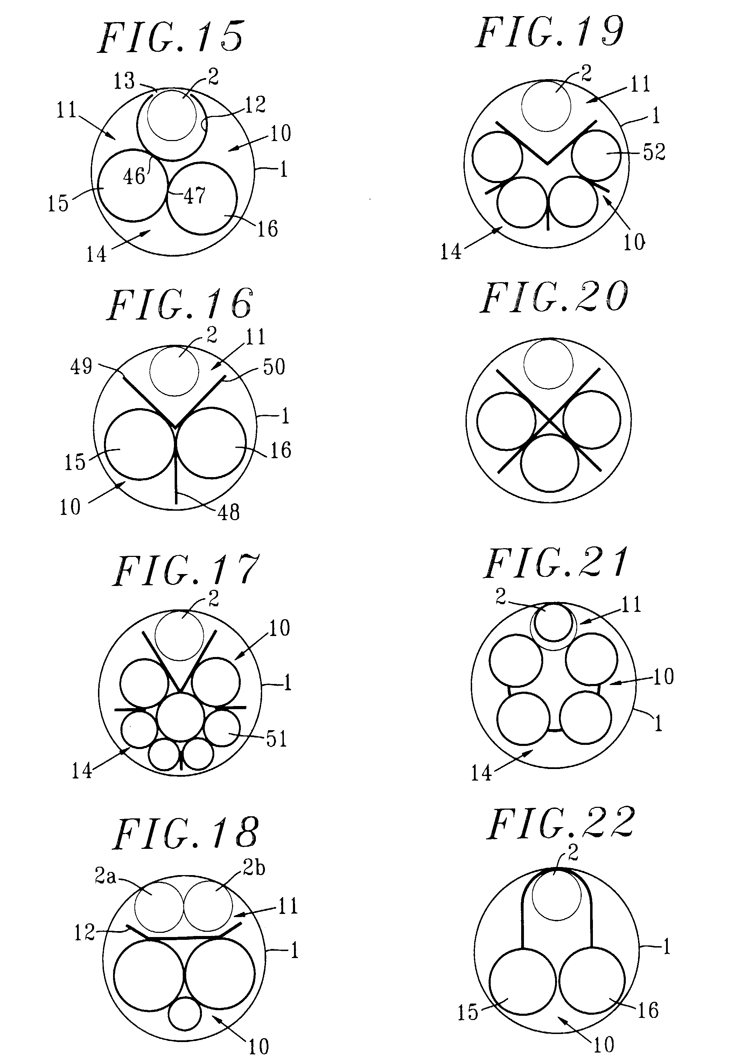

D'autres variantes similaires sont illustrées sur les Figures 17 à 20. Sur la Figure 17, la seconde section 14 de la structure 10 comporte, non plus deux mais un plus grand nombre d'alvéoles fermés tels que 51, ceux-ci présentant de l'un à l'autre des contours circulaires différents. Sur la Figure 18, la première section 11 de la structure 10 est aménagée pour enfermer, deux câbles existants 2a et 2b.

Sur la Figure 19, qui s'apparente plus directement à la Figure 17, les divers alvéoles fermés 52 de la seconde section 14 sont réunis par des entretoises de profil particulier, planes ou courbes. Sur la Figure 20, ces entretoises présentent la forme d'un simple croisillon.

Les Figures 21 et 22 illustrent encore deux autres modes de réalisation qui répondent au même principe mais avec des formes différentes, tout en restant strictement équivalentes.

On réalise ainsi le tubage d'un ou de plusieurs câbles existants déjà en place dans une conduite, elle-même généralement enterrée ou logée dans un ouvrage de génie civil souterrain, permettant une utilisation maximale du volume disponible dans cette conduite, notamment pour y disposer des alvéoles fermés, propres à recevoir ultérieurement d'autres câbles qui peuvent être insérés dans ceux-ci sans détériorer la gaine du câble existant et sans risque de blocage des nouveaux câbles contre le premier.

La structure de protection selon l'invention peut être introduite dans la conduite par tirage de la manière décrite précédemment ; le cas échéant, ce tirage peut être complété par poussage de la structure à son entrée dans la conduite au moyen de dispositifs classiques à molettes d'entraînement venant coopérer avec cette structure pour la faire progresser dans le sens souhaité.

Les matériaux utilisés pour constituer cette structure de protection peuvent être choisis selon divers critères, pour autant qu'ils limitent les frottements et présentent une bonne résistance mécanique. En ce sens, l'utilisation de polyéthylène à haute densité n'a qu'un caractère indicatif. Il en va de même de la nature des câbles utilisés, qu'il s'agisse du câble existant ou des nouveaux câbles mis en place dans les alvéoles.

Bien entendu et comme il résulte déjà de ce qui précède, il va de soi que l'invention ne se limite pas à l'exemple de réalisation plus spécialement décrit ci-dessus et représenté en référence aux dessins annexés ; elle en embrasse au contraire toutes les variantes.

## Revendications

1. Procédé pour la mise en place dans une conduite (1) contenant déjà au moins un câble gainé (2) existant, caractérisé en ce qu'il consiste à insérer progressivement dans cette conduite une structure de protection et de séparation (10), comprenant une première section (11) apte à venir entourer le câble existant au fur et à mesure de l'introduction de cette structure, et une seconde section (14), complémentaire de la première, délimitant dans le volume de la conduite et selon sa longueur, au moins un alvéole (15, 16) à contour fermé sur lui-même pour la mise en place ultérieure d'au moins un câble complémentaire (25), séparé du câble existant.

2. Procédé selon la revendication 1, caractérisé en ce qu'on fait comporter à la première section (11) de la structure (10) une fente longitudinale (13), dont les deux lèvres sont propres à s'écarter sensiblement l'une de l'autre, au fur et à mesure de la mise en place de la structure dans la conduite (1) pour permettre le passage du câble existant (2), s'engageant dans la première section au travers de cette fente, avant que ces lèvres ne se rapprochent pour emprisonner ce câble existant dans cette première section.

3. Procédé selon l'une des revendications 1 ou 2, caractérisé en ce qu'on monte sur le câble existant (2), à son extrémité disposée en aval et à l'extérieur de la conduite, un revêtement de protection (19), pour faciliter le glissement sur celui-ci des lèvres de la fente (13) de la première section (11) de la structure (10), au fur et à mesure de l'introduction dans celle-ci du câble existant.

4. Procédé selon l'une quelconque des revendications 1 à 3, caractérisé en ce qu'on monte dans l'alvéole (15, 16) à contour fermé sur lui-même un organe de traction ou de poussée de la structure (10) afin d'assurer son insertion dans la conduite (1), en même temps qu'on réalise l'introduction progressive du câble existant (2) dans la première section.

5. Dispositif pour la mise en oeuvre du procédé selon l'une quelconque des revendications 2 à 4, caractérisé en ce qu'il comporte, pour l'introduction dans la conduite (1) de la structure de protection et de séparation (10), un organe de traction (21) solidarisé de l'alvéole (15, 16, 51, 52) de la seconde section (14) de cette structure pour exercer un effort d'entraînement sur celle-ci à l'intérieur de la conduite au fur et à mesure de l'engagement du câble existant (2) dans la première section (11) au travers de la fente (13) de celle-ci.

6. Dispositif selon la revendication 5, caractérisé en ce que l'organe de traction (21) comporte un élément expansible (33), engagé dans l'alvéole par l'extrémité de la structure (10) et apte à être ancré contre la paroi interne de cet alvéole, cet organe comportant une barre de tirage (23), munie en bout d'un moyen (45) pour la fixation de l'extrémité d'un fil (8) réalisant l'entraînement de la structure dans la conduite, d'une extrémité à l'autre de celle-ci.

7. Dispositif selon la revendication 6, l'organe de traction (21) comporte également un sabot de guidage (22), présentant un alésage traversant (26) pour le passage du câble existant (2), ce sabot comprenant un épaulement de butée (30) pour l'extrémité de la première section (11) de la structure recevant ce câble au travers de sa fente longitudinale (13) au fur et à mesure du déplacement de cet organe dans la conduite, selon la longueur de ce câble.

8. Dispositif selon la revendication 7, caractérisé en ce que le sabot de guidage (22) de l'organe de traction (21) présente un logement dans lequel pénètre la seconde section (14) de la structure, l'extrémité de celle-ci venant en appui contre une portée (28) prévue en regard dans ce sabot.

9. Dispositif selon l'une quelconque des revendications 6 à 8, caractérisé en ce que l'élément expansible (33) de l'organe de traction, engagé dans l'alvéole de la seconde section est constitué par un bouchon muni d'une fente latérale (36) propre à lui conférer une relative élasticité et comporte un passage axial (35) dans lequel est monté un embout conique (37), prolongé par un mandrin (38) fileté à une extrémité (39), recevant un écrou (40) arrêté par le sabot de guidage (22), de telle sorte que la rotation de l'écrou provoque le déplacement du mandrin et l'expansion diamétrale du bouchon par l'embout conique, en réalisant le blocage de l'élément expansible contre la surface interne de l'alvéole.

10. Dispositif selon l'une quelconque des revendications 7 à 9, caractérisé en ce que la seconde section (14) de la structure de protection (10) comporte deux alvéoles (15, 16) d'axes parallèles et deux organes de traction (21), respectivement montés dans l'un et l'autre de ces deux alvéoles, dont chacun reçoit un élément expansible (33), le sabot de guidage (22) de ces deux organes de traction présentant une traverse horizontale (43), formant portée d'appui commune.

11. Dispositif selon les revendications 6 et 10, caractérisé en ce que la barre de tirage (44) est solidarisée de la traverse horizontale (43), sensiblement au centre de celle-ci, afin de répartir l'effort de traction exercé sur la structure de protection lors de son introduction dans la conduite.

12. Dispositif selon l'une quelconque des revendications 7 à 11, caractérisé en ce que le sabot de guidage (22) présente à son extrémité qui s'engage dans la conduite (1), un bec frontal (27), profilé pour provoquer le soulèvement du câble existant (2) reposant contre le fond de la conduite, au fur et à mesure du déplacement dans celle-ci de la structure de protection (10).

13. Dispositif selon l'une quelconque des revendications 7 à 12, caractérisé en ce que le sabot comporte, dans sa partie antérieure, un ergot d'accrochage (31) sur la première section (11) de la structure de protection (10).

14. Dispositif selon l'une quelconque des revendications 5 à 13, caractérisé en ce que la structure de support (10) comporte, dans sa seconde section (14), une pluralité d'alvéoles voisins, à contours généralement circulaires, tous identiques ou présentant des profils différents, ces alvéoles étant aptes à occuper de façon optimale le volume libre de la conduite à l'extérieur de la première section (11) qui reçoit le câble existant (2), cette première section présentant une paroi circulaire ou délimitée par des surfaces planes délimitant ensemble un secteur angulaire.

15. Dispositif selon l'une quelconque des revendications 5 à 14, caractérisé en ce que la première section (11) de la structure de protection (10) entoure un seul câble existant (2).

16. Dispositif selon l'une quelconque des revendications 5 à 14, caractérisé en ce que la première section (11) de la structure de protection (10) entoure plusieurs câbles existants (2a, 2b).
